# EUROPÄISCHE PATENTANMELDUNG

(11) **EP 1 093 253 A2**
(43) Veröffentlichungstag der Anmeldung: **18.04.2001**
(21) Anmeldenummer: 00120696.0
(22) Anmeldetag: 22.09.2000
(51) Int. Cl.: H04L 12/46

(54) **Virtuelles privates Netzwerk**

(30) Priorität: 16.10.1999 DE 19949948; 23.02.2000 DE 10008381
(71) Anmelder: Elsa AG, 52070 Aachen (DE)
(72) Erfinder: Koenzen, Ralf, 52134 Herzogenrath (DE); Nurmann, Jens, 52066 Aachen (DE)
(74) Vertreter: Kohlmann, Kai, Dipl.-Ing.

(57) **Zusammenfassung**

Um ein Verfahren zu schaffen, mit dem sich virtuelle private Netzwerke (VPN) preiswerter und einfacher realisieren, insbesondere einfacher erweitern lassen, wird erfindungsgemäß vorgeschlagen, daß Netzstandorte des VPN mit fest zugewiesenen Protokoll-Adressen (z.B. IP-Adressen) zumindest teilweise durch Netzstandorte mit dynamisch zuzuweisenden Protokoll Adressen ersetzt werden und eine zusätzliche Kommunikationsmöglichkeit zwischen den Netzstandorten geschaffen wird, über die die dynamischen Protokoll Adressen zwischen den Netzstandorten übertragen werden.

## Beschreibung

Die Erfindung betrifft ein Verfahren zum Verbinden von mindestens einem ersten, eine Datenübertragung vermittelnden Netzstandort zu mindestens einem zweiten Ziel-Netzstandort über ein Transit-Netzwerk, insbesondere das Internet, wobei die Netzstandorte mit dem Transit-Netzwerk verbindbar sind, die Daten zwischen den verbundenen Netzstandorten über einen nach einem Protokoll aufgebauten Daten-Verbindungskanal im Transit-Netzwerk übertragen werden, wobei jeder Netzstandort eine Protokoll Adresse (z.B. Internet Protokoll Adresse) besitzt, um eine koordinierte Datenübertragung zwischen den miteinander verbundenen Netzstandorten zu ermöglichen.

### Hintergrund der Erfindung

Die enorme Verbreitung der Internet Infrastruktur sowie die immer weiter wachsende Leistungsfähigkeit dieser Infrastruktur ermöglicht es, voneinander getrennte Netzstandorte, an denen sich lokale Netzwerke (LANs) oder einzelne Rechner befinden, über das Internet miteinander zu verbinden. Da bei einer Verbindung über das Internet teilweise überhaupt keine Kosten anfallen, jedenfalls von jedem Netzstandort nur der Verbindungstarif bis zum nächsten Internet-Zugang bezahlt werden muß, sind hierdurch im Vergleich zu direkten Verbindungen zwischen voneinander getrennten Netzstandorten, beispielsweise über eine ISDN-Standleitung, erhebliche Kosteneinsparungen möglich, insbesondere bei großen Entfernungen und/oder einer geringen Nutzung der Festverbindung. Bei einer schnellen Integration von neuen Netzstandorten, die beispielsweise aufgrund von überregionalen Unternehmenserweiterungen erforderlich werden, ist die Einrichtung von Festverbindungen in der Regel außerdem zu unflexibel und aufwendig. Dagegen lassen sich Verbindungen über das Internet auch für kleine Netzstandorte (Zweigniederlassungen, Filialen) mit geringem Kommunikationsvolumen relativ schnell und wirtschaftlich herstellen.

Eine Verbindung von mindestens zwei Netzstandorten über eine Transitnetzwerk, insbesondere das Internet bezeichnet man auch als VPN (Virtuelles Privates Netzwerk). Dieser Begriff bezeichnet die Möglichkeit, über ein beliebiges Transit-Netzwerk (wie insbesondere das Internet oder auch ein firmeneigenes Intranet) einen Datenkanal (den sogenannten "Tunnel") zu einem daran angeschlossenen lokalen Netzwerk (LAN, Local Area Network) oder einem einzelnen Rechner aufzubauen und über diesen Kanal Daten zwischen den beiden Endpunkten zu übertragen. Auf diese Weise läßt sich z. B. von jedem Internet-Einwahlpunkt der Welt aus auf ein an das Internet angeschlossenes LAN zugreifen - eine hilfreiche Einrichtung beispielsweise für Außendienstmitarbeiter: Zumeist findet sich im jeweiligen Ortsnetzbereich ein Einwahlpunkt in das Internet, von dem aus die sichere Verbindung über das Internet zum weiter entfernt liegenden Netzstandort aufgebaut wird. Anstelle des Internets kann auch jedes andere Netzwerk zum Datentransport genutzt werden. Somit ist es z. B. möglich, einen abgeschlossenen Bereich im lokalen Netzwerk zu schaffen, auf den nur ausgewählte Netzteilnehmer Zugriff haben. Diese können dann über die Tunnelverbindung innerhalb des normalen Netzwerks auf den abgeschlossenen Bereich zugreifen.

Der Zugang der einzelnen Netzstandorte des VPN zum Internet erfolgt über im Bedarfsfall herstellbare Verbindungen oder Festverbindungen zu Einwahlpunkten in das Internet, die von Internet-Service-Providern zur Verfügung gestellt werden. Als physikalische Übertragungswege für die Verbindungen zum Internet-Zugang kommen derzeit insbesondere Kupferleitungen, Kabelmodems, terrestrischer Funk, extraterristrischer Funk (z.B. Satellit) oder Glasfaserkabel in Betracht.

Für die Datenübertragung durch den Datenkanal (den sogenannten "Tunnel")im Transit-Netzwerk (z.B. Internet) werden die Daten in der Regel aus Sicherheitsgründen verschlüsselt. Die Realisierung des sicheren Datenkanals erfolgt mit Hilfe eines dafür entwickelten Protokolls (z.B. Layer-2 Forwarding (L2F), Layer-2 Tunneling Protocol (L2TP), Point-to-Point Tunneling Protocol (PPTP) oder IP Security Protocol (IPsec)), mit dem man von dem vermittelnden Netzstandort auf den Ziel-Netzstandort, zumeist ein lokales Netzwerk, zugreifen kann. In der praktischen Anwendung wählt sich zunächst der vermittelnde Netzstandort, z.B. ein Einzelrechner eines Außendienstmitarbeiters, in das Transit-Netzwerk (z.B. Internet) über einen örtlichen Einwahlpunkt ein. Zur Einwahl wird z.B. bei Windows 95/98 bzw. Windows NT das DFÜ-Netzwerk verwendet. Über diese Verbindung wird dann der Datenkanal bzw. Tunnel hergestellt. Über diesen Datenkanal kann man dann auf den Ziel-Netzstandort zugreifen, der i.d.R. ein LAN (z.B. Firmen-Netzwerk) ist. Das Tunnel Protokoll ermöglicht damit über das Transit-Netzwerk (z.B. Internet) sicher auf ein entferntes Netzwerk zuzugreifen, auch wenn dieses mit einem anderen Protokoll als das Transit-Netzwerk arbeitet.
Die Verbindung zwischen den einzelnen Netzstandorten und dem Transit-Netzwerk (z.B. Internet) wird von jeweils einer oder mehreren Komponenten durchgeführt, die insbesondere Aufgaben wie Verschlüsselung, Authentifizierung und Routing übernehmen. Diese Komponenten werden nachfolgend zusammenfassend als 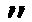 VPN-Router" bezeichnet.

### Stand der Technik / Beschreibung der Aufgabe

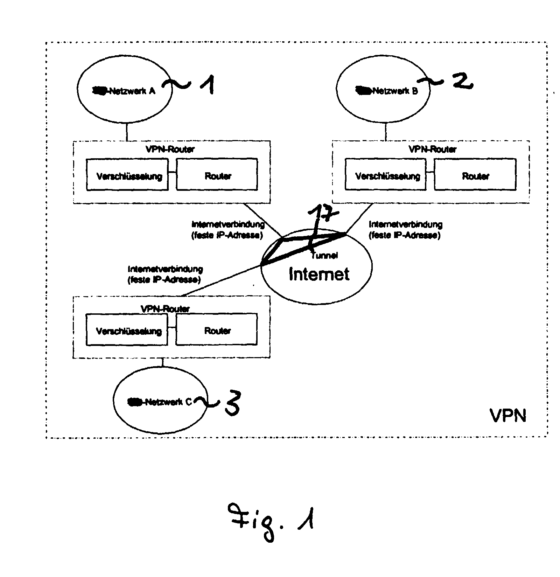

Nach dem Stand der Technik (siehe Figur 1) sind die verschiedenen Netzstandorte (LANs A - C) über Verbindungen mit fest zugewiesenen IP-Adressen (Internet Protokoll Adressen) an das Internet angeschlossen. Die Art der Verbindung zum Internet-Zugang (Wähl- oder Festverbindung) und die Bandbreite der Verbindung spielen keine Rolle und können für die einzelnen Netzstandorte innerhalb eines VPN unterschiedlich sein. Nach dem Stand der Technik ist es erforderlich, daß alle Netzstandorte über fest zugewiesene und an sämtlichen Netzstandorten bekannte IP-Adressen verfügen, damit die Daten vom vermittelnden Netzstandort zum Ziel-Netzstandort durch das Internet getunnelt werden können.

Um neue und/oder wechselnde Netzstandorte in das VPN zu integrieren, ist es erforderlich, die festen IP-Adresse an neuen oder wechselnden Netzstandorten in der Zugangssoftware zu konfigurieren und die dafür notwendigen Kommunikationsvorgänge mit dem für den Internet-Zugang an dem Netzstandort zuständigen Netzbetreiber zu vollziehen.

Ausgehend von diesem Stand der Technik liegt der Erfindung daher die Aufgabe zugrunde, ein Verfahren zu schaffen, mit dem sich VPNs preiswerter, schneller und einfacher realisieren und erweitern lassen.

Die Lösung dieser Aufgabe beruht auf der Erkenntnis, daß für eine flexible und mit geringem administrativem Aufwand durchführbare Integration neuer und/oder wechselnder Netzstandorte in das VPN, die Verbindungen mit fest zugewiesenen IP-Adressen durch Verbindungen mit dynamisch zugewiesenen IP-Adressen zumindest teilweise ersetzt werden müssen, um den Konfigurationsaufwand für die festen IP-Adresse an neuen oder wechselnden Netzstandorten in der Zugangssoftware und die dafür notwendigen Kommunikationsvorgänge mit dem Netzbetreiber zu ersparen. Die dynamischen IP-Adressen bringen jedoch folgende Probleme mit sich:
- die Netzstandorte bekommen erst im Moment der Einwahl zum Internet vom Netzbetreiber des Internetzugangs eine tem poräre aus einem bestimmten IP-Bereich stammende IP-Adresse dynamisch zugewiesen. Damit ist bei einem vermittelnden Netzstandort des VPN nicht mehr bekannt, unter welcher IP-Adresse sich der Ziel-Netzstandort befindet.
- Verbindungen mit dynamischer IP-Adresse können prinzipiell nicht vom Internet zum Netzstandort, sondern immer nur vom Netzstandort zum Internet aufgebaut werden. Ein aktuell nicht mit dem Internet verbundener Netzstandort ist daher mangels zugewiesener IP-Adresse nicht von anderen Netzstandorten erreichbar.

Die Erfindung beruht daher auf dem weiteren Gedanken, daß eine zusätzliche Kommunikationsmöglichkeit zwischen den Netzstandorten geschaffen wird. Hierzu wird erfindungsgemäß das verfügbare Wählleitungsnetz verwendet.

Im einzelnen wird die Aufgabe bei einem Verfahren der eingangs erwähnten Art dadurch gelöst, daß zur Datenübertragung über das Transitnetzwerk, insbesondere das Internet, von einem vermittelnden Netzstandort zu einem Ziel-Netzstandort mit einer dynamisch zuzuweisenden Protokoll Adresse, insbesondere Internet-Protokoll Adresse, zunächst eine Signalisierung zu dem Ziel-Netzstandort über ein Wählleitungsnetz erfolgt, über die zumindest die Protokoll Adresse des vermittelnden Netzstandortes zum Ziel-Netzstandort übertragen wird, um sodann die dem Ziel-Netzstandort dynamisch zugewiesene Protokoll Adresse an den vermittelnden Netzstandort entweder über eine weitere Signalisierung oder den Aufbau des Tunnels zu übertragen. Die beim Ziel-Netzstandort eingehende Signalisierung über das Wählleitungsnetz löst den Verbindungsaufbau des Ziel-Netzstandortes zum Transitnetzwerk, insbesondere dem Internet aus.

Unter dem Begriff Signalisierung wird die Übertragung von Informationen, speziell der verwendeten Protokoll-Adressen, von einem Standort zum anderen verstanden. Dies kann sowohl über gebührenpflichtige Wählverbindungen als auch, bei geeigneten Wählleitungsnetzen, wie z.B. ISDN, kostenfrei, z.B. über den D-Kanal, erfolgen.

Durch die Verwendung dynamischer Protokoll-Adressen kann der VPN-Teilnehmer an dem jeweiligen Netzstandort unproblematisch auf alternative, insbesondere kostengünstigere oder schnellere Zugänge zum Transitnetzwerk, insbesondere Internet ausweichen, was bei festen Protokoll-Adressen nicht ohne weiteres möglich ist. Aufgrund des erheblich geringeren Verwaltungs- und Organisationsaufwandes, insbesondere für Internet-Zugänge mit dynamischen IP-Adressen und den häufig geringeren Verbindungskosten verursachen erfindungsgemäß betriebene VPNs geringere Kosten bei gleichzeitig deutlich verbesserter Flexibilität des VPNs.

In einer bevorzugten Ausgestaltung der Erfindung ist in dem VPN mindestens ein Netzstandort vorgesehen, der insbesondere über eine Festverbindung mit dem Transitnetzwerk, insbesondere dem Internet verbunden ist und dem eine feste IP-Adresse zugewiesen wird. Dieser Netzstandort wird über einen nachfolgend als 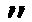 VPN Master-Router" bezeichneten Router an das Transitnetzwerk, insbesondere das Internet angeschlossen. Jedem weiteren Netzstandort wird eine dynamische Protokoll Adresse zugewiesen.

Zur Datenübertragung von einem vermittelnden Netzstandort mit einer dynamisch zugewiesenen Protokoll Adresse zu einem Ziel-Netzstandort mit einer festen Protokoll Adresse baut der vermittelnde Netzstandort zunächst eine Verbindung zum Transitnetzwerk, insbesondere Internet auf und bekommt anschließend eine dynamische Protokoll Adresse zugewiesen und meldet sich sodann bei dem Ziel-Netzstandort mit fester Protokoll Adresse an und überträgt die dynamische Protokoll Adresse dorthin. Zum Aufbau des VPN-Tunnels ist die Signalisierung über das Wählleitungsnetz nicht erforderlich, da die feste IP-Adresse, an den einzelnen Netzstandorten mit dynamischer IP-Adresse bekannt ist. Sie ist vorzugsweise in den Routing-Tabellen der die Netzstandorte mit dem Transitnetzwerk, insbesondere dem Internet, verbindenden VPN-Routern abgelegt.

Die Signalisierung wird jedoch erforderlich, wenn Daten von dem vermittelnden Netzstandort mit fester Internet Protokoll Adresse zu einem weiteren Ziel-Netzstandort des VPN mit einer dynamischen Internet Protokoll Adresse übertragen werden sollen, zu dem noch keine Verbindung besteht. Der vermittelnde Netzstandort signalisiert zunächst dem Ziel-Netzstandort über das Wählleitungsnetz seine feste Protokolladresse, der Ziel-Netzstandort identifiziert die über das Wählleitungsnetz eingehende Signalisierung und baut eine Verbindung zum Transitnetzwerk, insbesondere Internet auf, bekommt anschließend eine dynamische Protokoll Adresse zugewiesen und meldet sich sodann bei dem vermittelnden Netzstandort mit fester Protokoll Adresse an und überträgt die dynamische Protokoll Adresse dorthin.

Sollen in einem so konfigurierten VPN Daten zwischen zwei Netzstandorten mit dynamischer Protokoll-Adresse übertragen werden, so wird zunächst von dem vermittelnden Netzstandort eine Verbindung, insbesondere ein Tunnel, zum Netzstandort mit fester Protokoll-Adresse aufgebaut, und dort nach der Protokoll-Adresse des Ziel-Netzstandortes mit dynamischer Protokoll-Adresse gefragt. Ist dem Netzstandort mit fester Protokoll-Adresse die Protokoll-Adresse nicht bekannt, löst dieser wie oben beschrieben die Signalisierung über das Wählleitungsnetz zu dem gewünschten Ziel-Netzstandort aus und wartet, bis sich der Ziel-Netzstandort mit seiner Protokoll-Adresse meldet und leitet diese an den vermittelnden Netzstandort weiter, so daß die weitere Datenübertragung direkt zwischen den Netzstandorten mit dynamischer Protokoll-Adresse erfolgen kann. Es ist allerdings auch möglich, daß in einem derartigen VPN eine direkte Verbindung zwischen Netzstandorten mit dynamischen Protokoll-Adressen entsprechend den Merkmalen des Anspruchs 1 aufgebaut wird.

Die Signalisierung und den Auf- und Abbau der Verbindungen zum Internet-Zugang übernehmen die an den Netzstandorten dafür vorgesehenen VPN-Endgeräte, insbesondere VPN-Router. Physikalisch können die Verbindung zum Internet und die Signalisierungen über eine Leitung abgewickelt werden.

Darüber hinaus ist es möglich, daß die VPN-Endgeräte regelmäßig überprüfen, welche VPN-Verbindungen noch bestehen und entsprechende Tabellen (welcher Netzstandort ist unter welcher Internet-Adresse aktuell erreichbar) pflegen.

Nachfolgend wird die Erfindung anhand der Figuren 2 - 5 näher erläutert. Es zeigen:
- Figur 2:: Die Anbindung von Netzstandorten über ISDN-Wählverbindungen,
- Figur 3:: Die Anbindung von Netzstandorten über DSL-Verbindungen,
- Figur 4:: Die Anbindung von Netzstandorten über DSL-Verbindungen mit getrennten Datenrichtungen,
- Figur 5:: Die Anbindung von ausschließlich mit dynamischen IP-Adressen arbeitenden Netzstandorten.

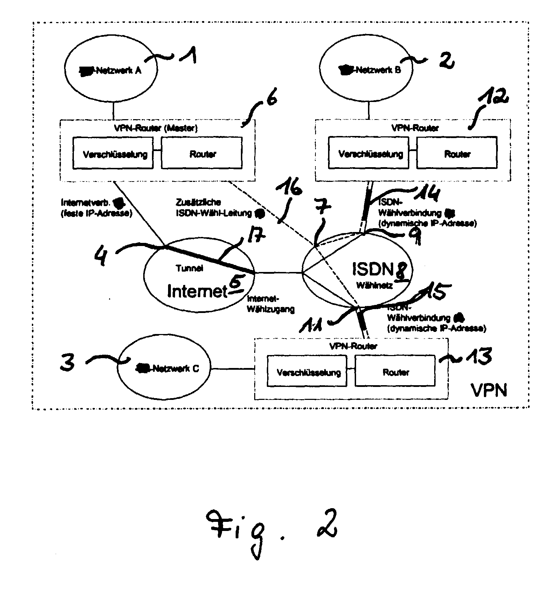

Figur 2 zeigt ein virtuelles privates Netzwerk (VPN) mit Netzstandorten 1, 2, 3. An den Netzstandorten 1, 2, 3 befinden sich jeweils lokale Netzwerke A, B, C. Das LAN A ist über einen VPN-Master-Router 6 mit einem Internetzugang 4 sowie mit einem Zugang 7 zum ISDN-Wählleitungsnetz 8 verbunden. Der Internetzugang 4 des VPN-Master-Routers 6 ist im Ausführungsbeispiel über eine Festverbindung ausgestaltet. Der VPN-Router 6 besitzt außerdem eine feste IP-Adresse. Die Internetzugänge 9, 11 der über VPN-Router 12, 13 an das Internet angebundenen LANs B, C sind über Wählverbindungen in das ISDN-Wählleitungsnetz 8 ausgestaltet.

Schließlich besteht zwischen sämtlichen LANs A, B, C eine zusätzliche Kommunikationsmöglichkeit, die über das ISDN-Wählleitungsnetz 8 herstellbar ist, wobei die Signalisierungen 14, 15 von den LANs B, C über das ISDN-Wählleitungsnetz 8 über dieselbe Leitung wie die Verbindung zum Internetzugang 9, 11 abgewickelt werden. Die Signalisierung 16 vom LAN A zum ISDN-Wählleitungsnetz 8 erfolgt separat von der Festverbindung des LANs A zum Internet 5.

Den Auf- und Abbau der Signalisierungen 14, 15, 16 und den Auf- und Abbau der Verbindungen zu den Internetzugängen 9, 11 übernehmen die VPN-Router 6, 12 und 13.

In Figur 2 ist der Fall einer Datenübertragung zwischen dem LAN A und dem LAN B bzw. dem LAN A und dem LAN C schematisch dargestellt:

Sollen beispielsweise Daten von dem LAN B zum LAN A übertragen werden, so baut zunächst das LAN B mit dynamisch zuzuweisender IP-Adresse eine Verbindung zum Internet 5 über das ISDN-Wählleitungsnetz 8 auf. Vom Internet 5 bekommt es zunächst eine dynamische IP-Adresse zugewiesen, die beim Aufbau des VPN-Tunnel 17 (= Daten-Verbindungskanal) zu dem LAN A mit fester IP-Adresse übertragen wird. Die feste IP-Adresse des LAN A ist in Tabellen der VPN-Router 12 und 13 hinterlegt.

Nach Übertragung der IP-Adresse des LAN B zum LAN A, ist es nun möglich, Daten über den Daten-Verbindungskanal 17 zu übertragen. Die Realisierung des im Ausführungsbeispiel sicheren Daten-Verbindungskanals 17 erfolgt in bekannter Weise nach dem entsprechenden VPN Tunnel-Protokoll (z.B. L2F, L2TP, PPTP oder IPsec). Da der Aufbau des Daten-Verbindungskanals 17 nach diesem Protokoll aus dem Stand der Technik bekannt ist, wird auf eine nähere Beschreibung des Protokolls verzichtet. Sollen nun Daten vom LAN A über den VPN-Master-Router 6 zum LAN C mit dynamisch zuzuweisender IP-Adresse übertragen werden, meldet sich der VPN-Master-Router 6 des LAN A zunächst über die Signalisierung 15,16 über das ISDN-Wählleitungsnetz 8 bei dem LAN C an, zu dem bisher noch keine Verbindung über das Internet 5 besteht. Diese Signalisierung setzt voraus, daß in einer Routing-Tabelle des VPN-Master-Routers 6 die Anschlußkennungen des LANs B und des LANs C zum ISDN-Wählleitungsnetz 8 gespeichert sind. Der VPN-Router 13 des LANs C identifiziert den eingehenden Anruf des VPN-Master-Routers 6 des LANs A. Die Identifizierung des eingehenden Anrufs erfolgt beispielsweise über CLIP (Calling-Line-Identification-Parameter). Dieses Dienstmerkmal gibt es bei jedem ISDN-Abschluß und bei allen neuen etwa ab Mitte 98 geschalteten Analog-Anschlüssen.

Stimmt die übermittelte Rufnummer des LANs A mit dem in der Routing-Tabelle des VPN-Router 13 gespeicherten Rufnummern-Eintrag überein, wird der VPN-Master-Router 6 des LANs A eindeutig identifiziert. Das LAN C baut sodann über seinen VPN-Router 13 eine Verbindung über den Internetzugang 11 zum Internet 5 auf und überträgt die ihm dynamisch zugewiesene IP-Adresse beim Aufbau des VPN-Tunnel 17 zu dem VPN-Master-Router 6 des LANs A dessen IP-Adresse fest und daher in den Routing-Tabellen der Router 12, 13 gespeichert ist. Nach der Übermittlung der dem LAN C zugewiesenen dynamischen IP-Adresse können nun auch Daten zwischen dem LAN A und dem LAN C übertragen werden.

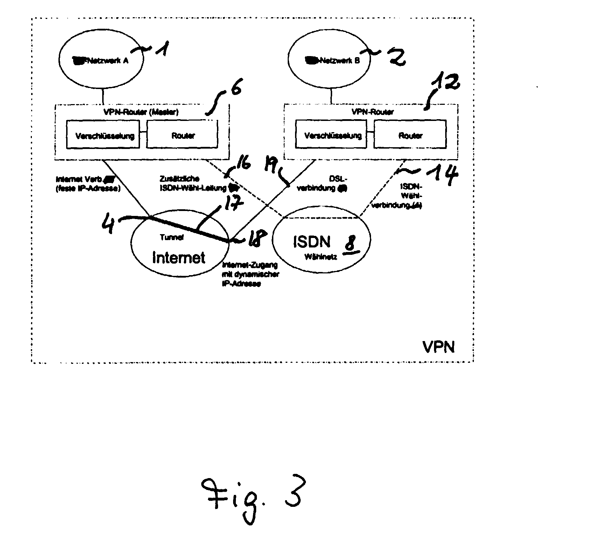

Figur 3 zeigt einen prinzipiell mit dem VPN nach Figur 2 übereinstimmenden Aufbau, allerdings besteht das VPN lediglich aus dem LAN A und dem LAN B, das abweichend von Figur 2 nicht über das ISDN-Wählleitungsnetz 8, sondern über eine DSL-Verbindung 19 mit dem Internet-Zugang 18 verbunden ist.

Der Verbindungsauf- und -abbau über den gesicherten Daten-Verbindungskanal 17 zwischen dem LAN A mit fester IP-Adresse und dem LAN B mit dynamisch zuzuweisender IP-Adresse erfolgt wie bei dem Ausführungsbeispiel nach Figur 2, so daß auf die dortigen Erläuterungen zur Vermeidung von Wiederholungen bezug genommen wird.

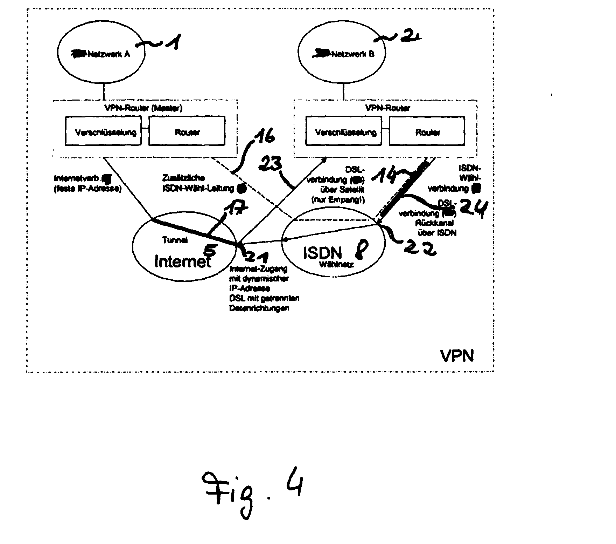

Das in Figur 4 dargestellte VPN stimmt prinzipiell mit dem VPN nach Figur 3 überein. Unterschiede ergeben sich hinsichtlich des Internet-Zugangs 21, 22 des LANs B. Über den Internetzugang 21, 22 wird übereinstimmend wie in den übrigen Ausführungsbeispielen dem LAN B beim Aufbau einer Verbindung dynamisch eine IP-Adresse zugewiesen. Dabei erfolgt die Datenübertragung vom Internet 5 in Richtung des LANs B mit einer DSL-Verbindung 23 über Satellit, während die Datenübertragung vom LAN B in Richtung des Internets 5 über einen Rückkanal 24 im ISDN-Wählleitungsnetz 8 erfolgt. Die Vermittlung der Datenübertragung zwischen dem LAN A und dem LAN B über den Daten-Verbindungskanal 17 erfolgt übereinstimmend wie in den zuvor beschriebenen Ausführungsbeispielen über die Signalisierung 14, 16 über das ISDN-Wählleitungsnetz 8 jeweils von dem vermittelnden Netzstandort zum Ziel-Netzstandort.

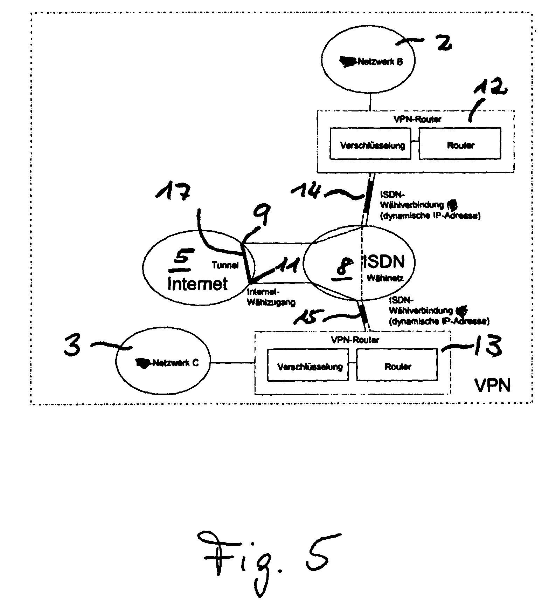

Der wesentliche Unterschied des VPN nach Figur 5 zu den vorangehenden Ausführungsbeispielen besteht darin, daß das LAN A mit fester IP-Adresse entfällt. Gemäß dem erfindungsgemäßen Verfahren ist es auch möglich, daß sämtliche zu verbindenden LANs mit dynamisch zuzuweisenden IP-Adressen arbeiten.

Zum Verbindungsaufbau zwischen dem LAN B und dem LAN C, die übereinstimmend wie im Ausführungsbeispiel nach Figur 2 Internetzugänge 9 bzw. 11 über das ISDN-Wählleitungsnetz 8 aufweisen, baut der VPN-Router 12 zunächst eine Verbindung über das ISDN-Wählleitungsnetz 8 zum Internet 5 auf und bekommt von dort eine dynamische IP-Adresse zugewiesen. Sodann löst der VPN-Router 12 eine Signalisierung 14, 15 über das ISDN-Wählleitungsnetz 8 zu dem VPN-Router 13 des LAN C aus, dessen Rufnummer in der Routing-Tabelle des VPN-Router 12 gespeichert ist.

Der VPN-Router 13 des LAN C baut sodann ebenfalls eine Verbindung über das ISDN-Wählleitungsnetz 8 zu dem Internet 5 auf und bekommt von dort dynamisch eine IP-Adresse zugewiesen und überträgt diese bereits beim Aufbau des VPN-Tunnels 17 im Internet 5 zu dem VPN-Router 12 des LAN B.

Sollte ein weiterer, in Figur 5 nicht dargestellter VPN-Router eine Verbindung zu einem der beiden Router B oder C aufnehmen wollen, so erfolgt der Verbindungsaufbau nach demselben Verfahren.

In keinem der beschriebenen Ausführungsbeispiele ist es erforderlich, daß die Signalisierung zwischen den LANs A, B und C über eine aufgebaute Verbindung erfolgt, da eine Übermittlung der Protokoll-Adressen auch ohne Annahme des Anrufs möglich ist.

Schließlich können die in den verschiedenen Ausführungsbeispielen dargestellten Techniken zum Anschluß von Netzstandorten an das Internet beliebig innerhalb eines VPN kombiniert werden.

Mit dem erfindungsgemäßen Verfahren lassen sich VPNs preiswerter und einfacher realisieren, insbesondere einfacher erweitern, in dem erfindungsgemäß Netzstandorte des VPN mit bisher fest zugewiesenen IP-Adressen zumindest teilweise durch Netzstandorte mit dynamisch zuzuweisenden IP-Adressen ersetzt werden und eine zusätzliche Kommunikationsmöglichkeit zwischen den Netzstandorten geschaffen wird, über die die dynamischen IP-Adressen zwischen den Netzstandorten übertragen werden können.

| **Bezugszeichenliste** | |
|---|---|
| **Nr.** | **Bezeichnung** |
| 1. | Netzstandort LAN (A) |
| 2. | Netzstandort LAN (B) |
| 3. | Netzstandort LAN (C) |
| 4. | Internetzugang (A) |
| 5. | Internet |
| 6. | VPN-Master-Router |
| 7. | Zugang zum ISDN-Wählleitungsnetz |
| 8. | ISDN-Wählleitungsnetz |
| 9. | Internetzugang (B) |
| 10. | - |
| 11. | Internetzugang (C) |
| 12. | VPN-Router (B) |
| 13. | VPN-Router (C) |
| 14. | Signalisierung (B) |
| 15. | Signalisierung (C) |
| 16. | Signalisierung (A) |
| 17. | Daten-Verbindungskanal |
| 18. | Internetzugang (DSL) |
| 19. | DSL-Verbindung |
| 20. | - |
| 21, 22 | Internetzugang |
| 23. | DSL-Verbindung (Satellit) |

## Patentansprüche

1. Verfahren zum Verbinden von mindestens einem eine Datenübertragung vermittelnden Netzstandort zu mindestens einem Ziel-Netzstandort über ein Transit-Netzwerk, wobei die Netzstandorte mit dem Transit-Netzwerk verbindbar sind, die Daten zwischen den verbundenen Netzstandorten über einen nach einem Protokoll aufgebauten Daten-Verbindungskanal im Transit-Netzwerk übertragen werden, wobei jeder Netzstandort für die koordinierte Datenübertragung eine offizielle Protokoll Adresse des Transit-Netzwerks benötigt, **dadurch gekennzeichnet**, daß zur Datenübertragung über das Transit-Netzwerk (5) von einem vermittelnden Netzstandort zu einem Ziel-Netzstandort mit einer dynamisch zuzuweisenden Protokoll Adresse zunächst über ein Wählleitungsnetz (8) zumindest die Protokoll Adresse des vermittelnden Netzstandortes zum Ziel-Netzstandort signalisiert wird, um sodann die dem Ziel-Netzstandort dynamisch zugewiesene Protokoll Adresse an den vermittelnden Netzstandort über eine Signalisierung über ein Wählleitungsnetz und/oder den Daten-Verbindungskanal zu übertragen.

2. Verfahren nach Anspruch 1, **dadurch gekennzeichnet**,
- daß einem Netzstandort (1) eine feste Protokoll Adresse zugewiesen wird und jeder weitere Netzstandort (2,3) für dynamisch zuzuweisende Protokoll Adressen konfiguriert ist,
- daß zur Datenübertragung von einem Netzstandort (2,3) mit einer dynamisch zuzuweisenden Protokoll Adresse zu dem Netzstandort (1) mit einer festen Protokoll Adresse der vermittelnde Netzstandort (2,3) mit dynamisch zuzuweisender Protokoll Adresse zunächst eine Verbindung zum Transit-Netzwerk (5) aufbaut, anschließend eine dynamische Protokoll Adresse zugewiesen bekommt und sich sodann bei dem Ziel-Netzstandort (1) mit fester Protokoll Adresse anmeldet und die dynamische Protokoll Adresse dorthin überträgt und
- daß zur Datenübertragung von dem Netzstandort (1) mit fester Protokoll Adresse zu einem Netzstandort (2,3) mit einer dynamisch zuzuweisenden Protokoll Adresse, zu dem noch keine Verbindung über einen Daten-Verbindungskanal (17) besteht, der vermittelnde Netzstandort (1) zunächst eine Signalisierung zu dem Ziel-Netzstandort (2,3) über das Wählleitungsnetz (8) überträgt, der Ziel-Netzstandort (2,3) die über das Wählleitungsnetz (8) eingehenden Signalisierung des vermittelnden Netz-Standortes (1) identifiziert und eine Verbindung zum Transit-Netzwerk (5) aufbaut, anschließend eine dynamische Protokoll Adresse zugewiesen bekommt und sich sodann bei dem vermittelnden Netz-Standort (1) mit fester Protokoll Adresse anmeldet und die dynamische Protokoll Adresse dorthin überträgt.

3. Verfahren nach Anspruch 2, **dadurch gekennzeichnet**, daß zur Datenübertragung von einem vermittelnden Netzstandort (2,3) mit einer dynamisch zuzuweisenden Protokoll Adresse zu einem Ziel-Netzstandort (2,3) mit einer dynamisch zuzuweisenden Protokoll Adresse der vermittelnde Netzstandort (2,3) zunächst eine Verbindung zum Transit-Netzwerk (5) aufbaut, anschließend eine dynamische Protokoll Adresse zugewiesen bekommt und sich sodann bei dem Netzstandort (1) mit fester Protokoll Adresse anmeldet und dort die dynamische Protokoll Adresse des Ziel-Netzstandortes (2,3) abfragt, sofern diese dort nicht gespeichert ist, der Netzstandort (1) mit fester Protokoll Adresse eine Signalisierung zu dem Ziel-Netzstandort (2,3) über das Wählleitungsnetz (8) überträgt, der Ziel-Netzstandort (2,3) die über das Wählleitungsnetz (8) eingehenden Signalisierung des Netzstandortes (1) mit fester Protokoll Adresse identifiziert und eine Verbindung zum Transit-Netzwerk (5) aufbaut, anschließend eine dynamische Protokoll Adresse zugewiesen bekommt und seine dynamische Protokoll Adresse über den Netzstandort (1) mit fester Protokoll Adresse zum vermittelnden Netzstandort (2,3) mit dynamisch zugewiesener Protokoll Adresse überträgt.

4. Verfahren nach Anspruch 1 oder 2, **dadurch gekennzeichnet**, daß zur Datenübertragung von einem vermittelnden Netzstandort (2,3) mit einer dynamisch zuzuweisenden Protokoll Adresse zu einem Ziel-Netzstandort (2,3) mit einer dynamisch zuzuweisenden Protokoll Adresse der vermittelnde Netzstandort (2,3) zunächst eine Verbindung zum Transit-Netzwerk (5) aufbaut, anschließend eine dynamische Protokoll Adresse zugewiesen bekommt und sodann zu dem Ziel-Netzstandort (2,3)seine Protokoll-Adresse über das Wählleitungsnetz (8) überträgt, der Ziel-Netzstandort (2,3) die über das Wählleitungsnetz (8) eingehende Signalisierung des vermittelnden Netzstandortes identifiziert und eine Verbindung zum Transit-Netzwerk (5) aufbaut, anschließend eine dynamische Protokoll Adresse zugewiesen bekommt und sich sodann bei dem vermittelnden Netzstandort mit seiner Protokoll Adresse anmeldet.

5. Verfahren nach einem der Ansprüche 1 bis 4, **dadurch gekennzeichnet**, daß die Signalisierung (14, 15, 16) zu dem Ziel-Netzstandort (1,2,3) über das ISDN- Wählleitungsnetz (8) aufgebaut wird.

6. Verfahren nach einem der Ansprüche 1 bis 5, **dadurch gekennzeichnet**, daß zu verbindenden Netz-Standorte (1,2,3) über ISDN-Wählverbindungen oder DSL-Verbindungen an das Transit-Netzwerk angeschlossen sind.

7. Verfahren nach einem der Ansprüche 1 bis 6, **dadurch gekennzeichnet**, daß jeder Netzstandort (1,2,3) über ein prozessorgesteuertes Endgerät, insbesondere Router (6, 12, 13) an das Transit-Netzwerk (5) und das Wählleitungsnetz (8) angeschlossen ist.

8. Prozessorgesteuertes Endgerät, insbesondere Router, für den Anschluß eines Netzstandortes an ein Virtuelles Privates Netzwerk (VPN), **dadurch gekennzeichnet**, daß in einem nichtflüchtigen Speicher des Endgerätes ein Programm zur Durchführung des Verfahrens nach einem oder mehreren der Ansprüche 1 bis 7 implementiert ist.

9. Endgerät nach Anspruch 8, **gekennzeichnet durch** einem flüchtigen Speicher für Routing-Tabellen, in denen insbesondere die Protokoll-Adressen anderer Netzstandorte abgelegt sind.
